# EUROPÄISCHE PATENTSCHRIFT

(11) **EP 2 738 079 B1**
(45) Veröffentlichungstag und Bekanntmachung des Hinweises auf die Patenterteilung: **23.03.2016**
(21) Anmeldenummer: 13193921.7
(22) Anmeldetag: 21.11.2013
(51) Int. Cl.: B62M 6/50

(54) **Vorrichtung zum Abschalten einer Unterstützung durch einen ein Fahrrad unterstützend antreibenden Elektromotor sowie Fahrrad mit einer derartigen Vorrichtung**
Device for disconnecting a support by an auxiliary electric motor for a bicycle and bicycle equipped with such a device
Dispositif de désactivation d'une assistance par un moteur électrique d'assistance pour l'entraînement d'un vélo et vélo doté d'un tel dispositif

(30) Priorität: 28.11.2012 DE 102012221681; 26.04.2013 DE 102013207636
(43) Veröffentlichungstag der Anmeldung: 04.06.2014
(73) Patentinhaber: Daum Forschung und Entwicklung GmbH, 90768 Fürth (DE)
(72) Erfinder: Daum, Wilhelm, 90768 Fürth (DE); Krieger, Peter, 90427 Nürnberg (DE); Mitländer, Gerd, 90762 Fürth (DE)
(74) Vertreter: Rau, Schneck & Hübner Patentanwälte Rechtsanwälte PartGmbB

(56) Entgegenhaltungen:
- CN-U- 202 272 148
- JP-A- 2012 116 227
- US-A- 5 178 033

## Beschreibung

Die Erfindung betrifft eine Vorrichtung zum Abschalten einer Unterstützung durch einen ein Fahrrad unterstützend antreibenden Elektromotor sowie ein Fahrrad mit einer derartigen Vorrichtung.

Die CN 202 272 148 U offenbart eine handbetätigbare Gangschaltung für ein elektrisch unterstützend angetriebenes Fahrrad gemäß dem Oberbegriff des Anspruchs 1. Ein Gangsensor kann eine Schalttätigkeit einer Gangschaltung erfassen und ein Leistungsausgangssignal des Elektromotors entsprechend anpassen.

Aus der WO 2010/066 511 A1 ist ein Hybridantrieb für ein Elektrofahrrad bekannt, wobei ein Schaltvorgang unter Last verhindert werden soll, um Beschädigungen einer Gangschaltung zu verhindern. Dazu ist vorgesehen, die Drehzahl bzw. den Antrieb eines Elektromotors bei einem Gangwechsel zu reduzieren.

Es ist die Aufgabe der vorliegenden Erfindung, ein mittels Elektromotor unterstützend antreibbares Fahrrad derart zu verbessern, dass ein Betätigen einer Gangschaltung nicht zu einer Beschädigung, insbesondere mechanischer Komponenten der Gangschaltung, führt.

Diese Aufgabe ist durch eine Vorrichtung zum Abschalten einer Unterstützung durch einen ein Fahrrad unterstützend antreibenden Elektromotor mit den Merkmalen nach Anspruch 1 gelöst. Erfindungsgemäß wurde erkannt, dass ein Gangwechsel nur dann zulässig sein soll, wenn ein Kraftübertragungselement, insbesondere eine Kette, im Wesentlichen zugbeanspruchungsfrei ist. Insbesondere muss gewährleistet, sein, dass das Kraftübertragungselement frei von einer Zugbeanspruchung ist, die von einem das Fahrrad unterstützend antreibenden Elektromotor ausgeht. Ein Entkoppeln des Kraftübertragungselements von dem unterstützend antreibbaren Elektromotor während einer Betätigung der Gangschaltung, also während eines Gangwechsels, ist durch zwei miteinander zusammenwirkende Sensorelemente möglich. Ein erstes Sensorelement ist ortsfest an dem Fahrrad anbringbar. Insbesondere ist das erste Sensorelement bezogen auf ein betätigbares Schaltelement der Gangschaltung ortsfest. Ortsfest im Sinne dieser Anmeldung bedeutet, dass das erste Sensorelement beispielsweise am Lenker des Fahrrads, insbesondere an einem Griff des Lenkers des Fahrrads, befestigt ist, oder fest am Rahmen des Fahrrads montiert ist, oder in einem an einer Seilzugummantelung eines betätigbaren Schaltelements der Gangschaltung befestigten Schaltungsgehäuse angebracht ist. Innerhalb der Seilzugummantelung ist das betätigbare Schaltelement verlagerbar geführt. Auch wenn die Seilzugummantelung beispielsweise bei einer Betätigung der Gangschaltung geringfügig bewegt wird, wird dies als ortsfest im Sinne der vorliegenden Anmeldung verstanden. Ein zweites Sensorelement ist an dem betätigbaren Schaltelement der Gangschaltung des Fahrrads anbringbar. In einer passiven Standardanordnung der Gangschaltung, also wenn gerade kein Gangwechsel erfolgt und somit das Schaltelement der Gangschaltung nicht betätigt ist, wirken das erste Sensorelement und das zweite Sensorelement derart zusammen, dass eine Unterstützung des Fahrrads durch den Elektromotor möglich ist. Dies ist insbesondere dadurch gewährleitstet, dass eine Stromversorgung des Elektromotors des Fahrrads in der passiven Standardanordnung der Gangschaltung erfolgt. Sobald das Schaltelement der Gangschaltung betätigt wird, wirken das erste Sensorelement und das zweite Sensorelement derart zusammen, dass die Unterstützung des Fahrrads durch den Elektromotor unterbrochen wird. Dies ist insbesondere dadurch gewährleistet, dass die Stromversorgung des Elektromotors des Fahrrads unterbrochen wird. Dies kann beispielsweise dadurch erfolgen, dass von mindestens einem der Sensorelemente ein Schaltsignal ausgelöst wird, das beispielsweise an eine Steuerungseinheit übertragen wird. Mittels einer Steuerungseinheit kann die Unterstützung des Fahrrads durch den Elektromotor durch eine Unterbrechung der Stromzufuhr zu dem Elektromotor unterbrochen werden. Durch Unterbrechen der Stromzufuhr des Elektromotors ist ein unterstützender Antrieb durch den Elektromotor ausgeschlossen, während ein Gangwechsel durch Betätigen des Schaltelements erfolgt. Ein Abschalten einer Unterstützung durch einen ein Fahrrad unterstützend antreibenden Elektromotor bewirkt also eine Unterbrechung der Unterstützung für das Fahrrad durch den Elektromotor. Ein Fahrer des Fahrrads kann bedenkenlos und jederzeit einen Gangwechsel vornehmen. Es ist insbesondere nicht erforderlich, dass ein Fahrer vor der Betätigung der Gangschaltung prüft, ob der Elektromotor gerade das Fahrrad unterstützend antreibt. Eine nachteilige Beeinträchtigung des Fahrgefühls des Fahrers, insbesondere durch Geräuschentwicklung, ist ausgeschlossen. Das Risiko einer Verletzung und/oder eines Sturzes ist reduziert. Das Schaltelement ist als ein entlang einer Zugelementlängsachse betätigbares Zugelement ausgeführt. Insbesondere ist das Zugelement ein Bowdenzug. Das zweite Sensorelement ist als ein um eine Sensorrad-Drehachse drehbares und federnd gehaltenes Sensorrad ausgeführt. Dadurch, dass das zweite Sensorelement drehbar um die Sensorrad-Drehachse gelagert ist, liegen zwischen dem Sensorrad und dem als betätigbares Zugelement ausgeführten Schallelement Rollreib-Bedingungen vor. Der Reibkoeffizient für derartige Rollreib-Bedingungen ist reduziert. Das bedeutet, dass eine auf das Schaltelement, also das Zugelement, wirkende, von dem Sensorrad verursachte Reibkraft minimal ist. Der unter Rollreib-Bedingungen wirkende Reibkoeffizient ist gegenüber einem Gleitreibkoeffizient reduziert und beträgt lediglich einen Bruchteil des Reibkoeffizienten unter Gleitreib-Bedingungen. Insbesondere beträgt der Reibkoeffizient unter Rollreib-Bedingungen höchstens 10 %, insbesondere höchstens 5 % uns insbesondere höchstens 3 % des Reibkoeffizienten unter Gleitreib-Bedingungen. In Folge der federnden Halterung des Sensorrades ist dessen Anbringung an dem Zugelement vereinfacht und gleichzeitig verbessert. Die erfindungsgemäße Vorrichtung ist insbesondere unkompliziert aufgebaut. Die Vorrichtung ist für eine mechanisch betätigbare Gangschaltung geeignet. Insbesondere ist es denkbar, die erfindungsgemäße Vorrichtung an einem Pedelec mit mechanisch betätigbarer Gangschaltung nachzurüsten. Insbesondere ist es nicht erforderlich, eine elektrische und/oder automatische Gangschaltung an einem Pedelec vorzusehen, um eine Unterbrechung der Stromzufuhr für den Elektromotor bei einem Gangwechsel auszuschließen. Dadurch, dass die Vorrichtung an einer mechanisch betätigbaren Gangschaltung direkt die Position des Schaltelements erfasst, kann als Schaltelement ein Standard-Zugelement verwendet werden. Ein derartiges Standard-Zugelement ist beispielsweise ein Bowdenzug. Ein derartiger Bowdenzug wird standardmäßig für Schaltvörgänge an einem Fahrrad verwendet. Das bedeutet, dass die erfindungsgemäße Vorrichtung ohne Weiteres bei einem bereits vorhandenen Fahrrad beziehungsweise einer bereits vorhandenen Gangschaltung nachgerüstet werden kann. Es ist insbesondere nicht erforderlich, das Standard-Zugelement auszutauschen und/oder durch zusätzliche Elemente zu ergänzen wie beispielsweise Positionsmarker, die beider Erfassung der Position des Zugelements mittels optischer Messverfahren notwendig wären. Dadurch ergibt sich ein deutlicher Kostenvorteil.

Bei einer Vorrichtung bei der das Sensorrad mit einer quer, insbesondere senkrecht, zur Zugelementlängsachse orientierten Federkraft belastet an dem Zugelement anliegt, ist gewährleistet, dass das Sensorrad zuverlässig an dem Zugelement anliegt. Dazu ist das Sensorrad mit einer quer zur Zugelementlängsachse orientierten Federkraft belastet, d.h. die Richtung der Federkraft weist mindestens eine Richtungskomponente auf, die senkrecht zur Zugelementlängsachse orientiert ist. Die quer orientierte Federkraft kann eine parallel zur Zugelementlängsachse orientierte Richtungskomponente aufweisen, ist aber ist nicht ausschließlich parallel zur Zugelementlängsachse ausgerichtet. Insbesondere ist die Federkraft senkrecht zur Zugelementlängsachse orientiert. Das Sensorrad wird also gegen das Zugelement gedrückt. Die Erfassung eines Gangwechsels, d.h. eines Schaltvorgangs, ist verbessert.

Eine Vorrichtung nach Anspruch 2 ermöglicht eine direkte, schnelle und unkomplizierte Funktionsweise der Sensorelemente. Derartige Sensorelemente können besonders platzsparend und unauffällig an einem Fahrrad mit Gangschaltung angebracht oder nachgerüstet werden. Derartige Sensorelemente ermöglichen eine Erfassung einer mechanischen Betätigung eines Schaltelements der Gangschaltung mit hoher Zuverlässigkeit. Die Sensorelemente sind in dem Schaltgehäuse, insbesondere vor äußeren Einflüssen wie Witterung, geschützt. Eine derartige Vorrichtung ist besonders robust.

Bei einer Vorrichtung nach Anspruch 3 ist ein Zusammenwirken des Zugelements mit den im Schaltgehäuse angeordneten Sensorelementen ermöglicht. Dadurch ist gewährleistet, dass die Erfassung eines Schaltvorgangs ungestört von äußeren Einflüssen erfolgen kann. Eine derartige Vorrichtung ist besonders robust ausgeführt.

Bei einer Vorrichtung nach Anspruch 4 ist die federnde Halterung des Sensorrades besonders unkompliziert ausgeführt. Mittels eines Federelements wird das Sensorrad federnd gegen das Zugelement gedrückt. Das Federelement ist insbesondere einstückig mit einem Halteelement zur halternden Anordnung in einem Schaltgehäuse ausgeführt. Das Federelement ist insbesondere aus Kunststoff und/oder Metall hergestellt. Das Federelement weist eine Elastizität derart auf, dass eine während der Lebensdauer des Fahrrads dauerhafte, elastisch federnde Halterung des Sensorrades gewährleistet ist. Das Federelement kann insbesondere derart ausgeführt sein, dass eine von dem Federelement verübte Federkraft einstellbar ist. Eine Einstellbarkeit der Federkraft kann beispielsweise sinnvoll sein, wenn in Folge von Bauteiltolleranzen eine erforderliche Federkraft verändert werden muss, da sonst eine ausreichende Federkraft nicht gewährleistet wäre. Dies ist dann denkbar, wenn ein geometrischer Abstand zwischen Zugelement und Federelement derart groß ist, dass die von dem Federelement verursachte Federkraft ein Andrücken des federnd gehaltenen Sensorrades nicht zuverlässig möglich ist. Insbesondere wird die federnde Halterung durch die Geometrie des Federelements vorgegeben, das als V-förmiges Federelement ausgeführt ist. Es ist auch denkbar andersartig ausgeführte Federelemente zu verwenden wie beispielsweise Tellerfedern oder Blattfedern.

Bei einer Vorrichtung nach Anspruch 5 ist die Erfassung eines Gangwechsels besonders unkompliziert möglich. Dadurch, dass das Sensorrad einen Magnet, insbesondere einen Permanentmagnet, aufweist, dessen Magnetfeld bei einer Drehung des Sensorrades um die Sensorrad-Drehachse veränderlich ist, wird ein Schaltvorgang dadurch erfasst, dass eine relative Drehposition des Sensorrades überwacht wird. Das von dem Magneten verursachte Magnetfeld ist insbesondere nicht rotationssymmetrisch zur Sensorrad-Drehachse. Insbesondere ist der Magnet drehfest an dem Sensorrad bezüglich der Sensorrad-Drehachse befestigt und insbesondere aufgeklebt. Eine Drehung des Sensorrades bewirkt also direkt eine Drehung des Magneten, woraus eine Änderung des Magnetfelds bezüglich der Sensorrad-Drehachse resultiert.

Bei einer Vorrichtung nach Anspruch 6 ist eine Wartung und/oder Reparatur der Sensorelemente besonders unkompliziert möglich. Das Schaltgehäuse weist einen Gehäusegrundkörper und einen damit lösbar verbindbaren Gehäusedeckel auf. Insbesondere ist der Gehäusedeckel mit dem Gehäusegrundkörper durch mindestens eine und insbesondere durch mehrere Schrauben verschraubt. Es ist auch denkbar, dass der Gehäusedeckel auf den Gehäusegrundkörper aufrastbar ist. Das Schaltgehäuse kann beispielsweise aus Kunststoff und/oder Metall hergestellt sein. Sofern eine Wartung und/oder Reparatur der Sensorelemente nicht oder nur sehr selten beabsichtigt ist, kann der Gehäusedeckel mit dem Gehäusegrundkörper auch verklebt sein. Durch ein Verkleben ist es insbesondere möglich, dass ein von dem Gehäuse umschlossener Innenraum abgedichtet ist. Insbesondere ist Wassereintritt in den Gehäuseinnenraum ausgeschlossen. Die darin befindlichen Komponenten, insbesondere Sensorkomponenten, sind vor äußeren Einflüssen wie Wasser und/oder Staub zuverlässig geschützt.

Bei einer Vorrichtung nach Anspruch 7 ist gewährleistet, dass das mechanisch betätigbare Schaltelement sicher und zuverlässig an dem Schaltgehäuse gehalten und durch dieses hindurch geführt ist. Dadurch ist die Erfassung eines Schaltvorgangs zuverlässig gewährleistet.

Bei einer Vorrichtung nach Anspruch 8 ist die Erfassung einer relativen Drehposition des zweiten Sensorelements mittels des ersten Sensorelements vereinfacht.

Eine Vorrichtung nach Anspruch 9 ermöglichte eine direkte Erfassung des Schaltvorgangs aufgrund einer Detektion einer Drehbewegung des Sensorrads um die Sensorrad-Drehachse. Dazu ist das erste Sensorelement ein Magnetsensor, insbesondere ein Hallsensor. Derartige Sensoren sind kostengünstig verfügbar. Ein derartiger Sensor kann unkompliziert in das Schaltgehäuse integriert werden. Ein derartiger Sensor kann unkompliziert mit einer Steuerungseinheit kommunizieren und insbesondere ein Schaltsignal derart veranlassen, dass eine Unterbrechung der Stromzufuhr des Elektromotors während eines Gangwechsels ermöglicht ist.

Eine Vorrichtung nach Anspruch 10 ermöglicht eine direkte Erfassung eines Gangwechsels über das mechanisch betätigbare Zugelement. Dazu liegt das Sensorrad mit einer äußeren Mantelfläche kraftschlüssig an dem Zugelement an. In Folge einer Längsbewegung des Zugelements entlang der Zugelementlängsachse wird eine Drehbewegung des Sensorrades um die Sensorrad-Drehachse in Folge der Reibkraft zwischen dem Sensorrad und dem Zugelement initiiert. Insbesondere weist die Mantelfläche des Sensorrades eine Nut auf. Bei einer derartigen Vorrichtung ist das Zusammenwirken zwischen Sensorrad und Zugelement zusätzlich verbessert. Die Erfassung eines Schaltvorgangs ist dadurch mit erhöhter Zuverlässigkeit möglich. Eine Nut kann verschiedenartig ausgeführt sein. Beispielsweise kann die Nut V-förmig, U-förmig, rechteckförmig oder in einer anderen Weise ausgestaltet sein. In Folge einer derartigen Nutform ist das Zugelement zumindest teilweise in der Nut aufgenommen. Dadurch ist die Führung des Zugelements entlang der Zugelementlängsachse verbessert. Die Kraftübertragung von dem Zugelement auf das Sensorrad ist verbessert.

Bei einer Vorrichtung nach Anspruch 11 ist in das erste Sensorelement eine Sensorikeinheit integriert. Insbesondere ist es denkbar, dass das Sensorelement auf eine Sensorikeinheit aufgesteckt ist. Das Sensorelement kann in die Sensorikeinheit beispielsweise durch Anlöten integriert sein. Das Sensorelement kann auch kabelgebunden mit der Sensorikeinheit in Signalverbindung stehen. Das erste Sensorelement mit der integrierten Sensorikeinheit weist eine eigene Grundintelligenz derart auf, dass ein Schaltsignal von der Sensorikeinheit des ersten Sensorelements verursacht werden kann, um eine Schaltunterbrechung des Elektromotors zu veranlassen. Insbesondere ist es nicht erforderlich, dass ein Schaltsignal über eine weitere mit dem ersten Sensorelement verbundene Sensorikeinheit ausgelöst wird. Die Vorrichtung ist kompakt und deshalb robust und wenig fehleranfällig ausgeführt.

Vorteilhaft ist eine Vorrichtung, bei der die Sensorikeinheit in Signalverbindung mit einer Steuereinheit steht. Dann ist eine Signalübertragung von der Sensorikeinheit an eine Steuerungseinheit vereinfacht. Die Signalübertragung kann kabelgebunden oder kabellos erfolgen.

Eine Vorrichtung mit einem Federelement aus Kunststoff ist flexibel und unkompliziert herstellbar. Insbesondere kann die Geometrie des Federelements flexibel festgelegt werden. Die Geometrie des Federelements kann für Betrag und Richtung der Federkraft auf das Sensorrad ursächlich sein. Es ist auch möglich, die Federkraft für ein Federelement festgelegter Geometrie durch Variation des zu verwendenden Kunststoffmaterials zu beeinflussen. Das Federelement aus Kunststoff weist ein, insbesondere gegenüber Metall, reduziertes Gewicht auf. Kunststoff hat gute elastische Eigenschaften. Im Rahmen der für ein Fahrrad zu erwartenden Lebensdauerbeanspruchungen, insbesondere zyklischer Temperaturwechsel, Feuchte und/oder mechanische Belastungen, sind keine Alterungseffekte zu erwarten. Die mittels des Kunststoff-Federelements verursachbaren Federkräfte sind für die Erfassung der Position des Sensorrades geeignet.

Bei einer Vorrichtung nach Anspruch 13 ist das erste Sensorelement besonders robust in dem Schaltgehäuse integriert. Das erste Sensorelement ist an einem Boden des Schaltgehäuses und insbesondere an einem Boden des Gehäusegrundkörpers befestigt. Insbesondere ist das erste Sensorelement drehfest bezüglich der Sensorrad-Drehachse an dem Boden des Gehäusegrundkörpers angebracht. Der Boden des Gehäusegrundkörpers ist insbesondere dem lösbar verbindbaren Gehäusedeckel gegenüberliegend angeordnet.

Die Aufgabe der vorliegenden Erfindung ist weiterhin durch ein Fahrrad mit den Merkmalen nach Anspruch 14 gelöst. Ein derartiges Fahrrad weist eine erfindungsgemäße Vorrichtung auf und ermöglicht die Vorteile einer derartigen Vorrichtung, auf die hiermit verwiesen wird.

Sowohl die in den Patentansprüchen angegebenen Merkmale als auch die in den nachfolgenden Ausführungsbeispielen der erfindungsgemäßen Vorrichtung zum Abschalten einer Unterstützung durch einen ein Fahrrad unterstützend antreibbaren Elektromotor angegebenen Merkmale sind jeweils für sich allein oder in Kombination miteinander geeignet, den erfindungsgemäßen Gegenstand weiterzubilden.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Seitenansicht eines Fahrrads mit einem unterstützend antreibenden Elektromotor und mit einer Vorrichtung zur Unterbrechung einer Unterstützung durch den Elektromotor gemäß der Erfindung,
- Fig. 2: eine vergrößerte perspektivische Detailansicht einer nicht erfindungsgemäßen Vorrichtung,
- Fig. 3: eine vergrößerte perspektivische Detailansicht einer nicht erfindungsgemäßen Vorrichtung,
- Fig. 4: eine vergrößerte perspektivische Detailansicht einer nicht erfindungsgemäßen Vorrichtung,
- Fig. 5: eine vergrößerte perspektivische Detailansicht einer nicht erfindungsgemäßen Vorrichtung,
- Fig. 6: eine vergrößerte perspektivische Detailansicht einer nicht erfindungsgemäßen Vorrichtung,
- Fig. 7: eine vergrößerte perspektivische Detailansicht einer Vorrichtung gemäß einer Ausführungsform der Erfindung, und
- Fig. 8: eine Schnittdarstellung gemäß Linie VIII-VIII in Fig. 7.

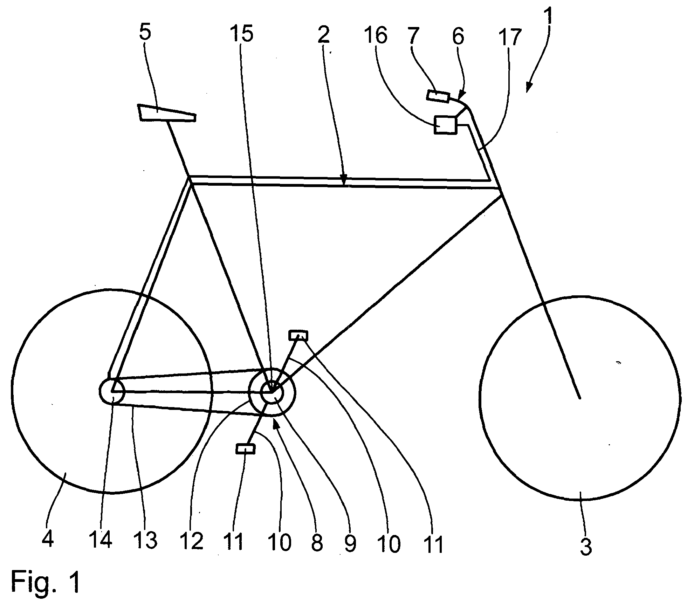

Ein in Fig. 1 schematisch dargestelltes Fahrrad 1 hat einen Rahmen 2, an dem ein Vorderrad 3 und ein Hinterrad 4 befestigt sind. Weiterhin ist am Rahmen 2 ein Sattel 5 und ein Lenker 6 mit Griffen 7 vorgesehen. Das Fahrrad 1 kann von einem nicht dargestellten Fahrer mittels einer mechanischen Antriebseinrichtung 8 durch Muskelkraft angetrieben werden. Die mechanische Antriebseinrichtung 8 umfasst eine zentral angeordnete Tretlagerwelle 9, von der sich aus radial nach außen zwei Tretkurbeln 10 erstrecken. An dem der Tretlagerwelle 9 gegenüberliegend angeordneten Ende der Tretkurbel 10 ist jeweils ein Pedal 11 vorgesehen. Die über die mechanische Antriebseinrichtung 8 von einer Person eingebrachten Antriebsbewegung wird von der Tretlagerwelle 9 über ein damit drehfest verbundenes Zahnrad 12 auf eine Kraftübertragungseinrichtung 13 in Form einer Kette übertragen. Mittels der Kraftübertragungseinrichtung 13 wird eine Antriebsbewegung von der mechanischen Antriebseinrichtung 8 auf eine Nabe 14 des Hinterrads 4 übertragen. Dazu kann an der Nabe 14 ein nicht näher dargestelltes Zahnrad drehfest mit der Nabe 14 verbunden sein.

Das Fahrrad 1 weist weiterhin einen Elektromotor 15 auf, der gemäß dem gezeigten Ausführungsbeispiel in die Tretlagerwelle 9 integriert ist. Der Elektromotor 15 kann auch einer anderen Stelle des Fahrrads befestigt sein. Der Elektromotor 15 dient zum unterstützenden Antreiben des Fahrrads 1, indem der Elektromotor 15 ein Drehmoment auf die Tretlagerwelle 9 ausübt, das der von einer Person ausgeübten Antriebsdrehbewegung gleichgerichtet ist. Das gezeigte Fahrrad 1 wird auch als Elektrofahrrad oder Pedelec bezeichnet. Der Elektromotor 15 kann auch an dem Rahmen 2, insbesondere in einem speziell dafür vorgesehenen Gehäuse, befestigt sein. Der Elektromotor 15 kann auch in einem der Rohre des Rahmens 2 befestigt sein. Der Elektromotor 15 ist gemäß dem gezeigten Ausführungsbeispiel als Mittelmotor ausgeführt.

Es ist auch denkbar, dass der Elektromotor 15 als Nabenmotor ausgeführt ist und in der Nabe 14 des Hinterrads 4 integriert ist. In diesem Fall, also wenn der Elektromotor 15 als Nabenmotor ausgeführt ist, wirkt der Elektromotor 15 derart, dass ein zusätzliches Drehmoment durch einen Schaltvorgang auf die Kette ausgeübt wird, um die Kette zu entlasten. Bei einem Nabenmotor ist das Funktionsprinzip im Vergleich zu einem Mittelmotor verändert. Insbesondere ist es nicht vorgesehen, dass der Nabenmotor vorübergehend, insbesondere durch Unterbrechung der Stromzufuhr, abgeschaltet wird. Eine derartige Maßnahme, also das Abschalten der Stromzufuhr für einen Nabenmotor, wäre nur dann möglich, wenn in den Nabenmotor eine Nabenschaltung integriert wäre.

Das Fahrrad 1 weist zudem eine Gangschaltung auf, die eine Übersetzung oder Untersetzung der Antriebsdrehbewegung auf die Nabe 14 ermöglicht. Die Gangschaltung umfasst ein insbesondere im Bereich des Lenkers 6 angebrachtes, betätigbares Schaltelement 16. Durch Betätigen des Schaltelements 16 erfolgt ein Gangwechsel mittels der Gangschaltung. Das Schaltelement 16 ist in Fig. 1 rein schematisch dargestellt. Eine nähere Erläuterung möglicher Ausführungsformen eines Schaltelements erfolgt anhand der nachfolgenden Ausführungsbeispiele. Das Schaltelement 16 ist, insbesondere mechanisch, insbesondere mittels eines Seilzuges, mit einem korrespondierenden Stellelement gemäß dem in Fig. 1 schematisch dargestellten Beispiel einer Nabenschaltung an der Nabe 14 des Hinterrads 4 angeordnet. Die mechanische Verbindung 17 zwischen dem Schaltelement 16 und der Nabe 14 dient zur direkten Kraftübertragung für einen Schaltvorgang. Es ist auch denkbar, dass das Fahrrad 1 anstelle einer Nabenschaltung eine Kettenschaltung aufweist. In diesem Fall ist das mit dem Schaltelement 16 korrespondierende Stellelement an einer Zahnradanordnung vorgesehen, die an der Nabe 14 des Hinterrads 4 und/oder an der mechanischen Antriebseinrichtung 8 konzentrisch zur Tretlagerwelle 9 angeordnet ist.

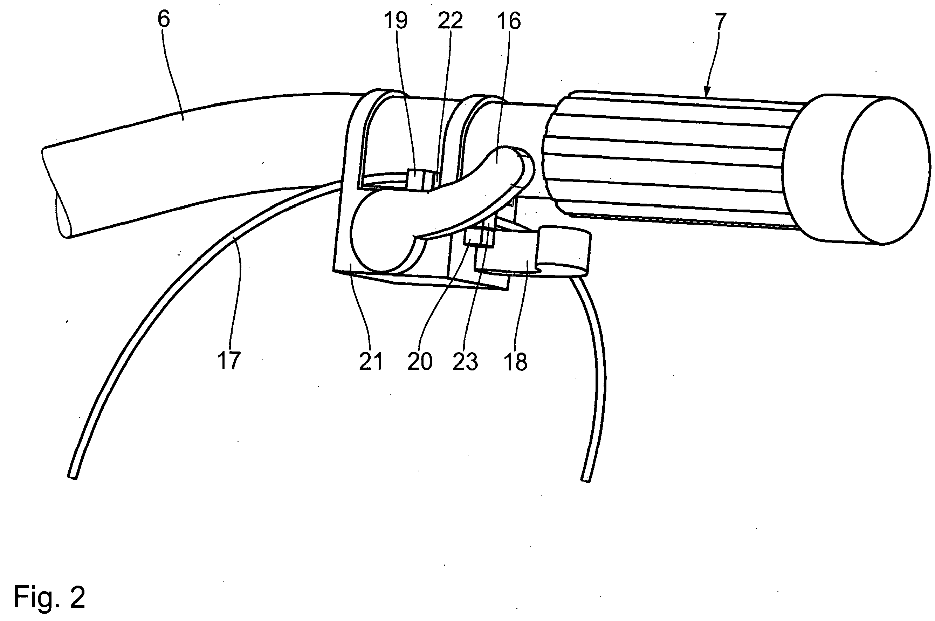

Nachfolgend wird anhand von Fig. 2 eine Vorrichtung zur Unterbrechung einer Stromversorgung des Elektromotors 15 näher erläutert. Gemäß der gezeigten Ausführungsform weist eine Gangschaltung zwei Schaltelemente auf, wobei ein erstes Schaltelement 16 als Drehhebel für ein Aufwärtsschalten, d. h. zum Erhöhen der Schaltstufe, vorgesehen ist. Weiterhin ist ein zweiter Schalthebel 18, der als Drehhebel ausgeführt ist, vorgesehen.

Das zweite Schaltelement 18 dient zum Herunterschalten, d. h. zum Reduzieren einer Gangstufe. An den Schaltelementen 16, 18 ist jeweils ein zweites Sensorelement 19, 20 angebracht. Bei einer Betätigung des Schaltelements 16, 18 wird das daran befestigte zweite Sensorelement 19 bzw. 20 relativ zu einem Schaltungsgehäuse 21 verlagert. An dem Schaltungsgehäuse 21 sind jeweils erste Sensorelemente 22, 23 befestigt, die mit den zweiten Sensorelementen 19 bzw. 20 korrespondieren. Gemäß dem gezeigten Ausführungsbeispiel ist das zweite Sensorelement 19 an dem Schaltelement 16 befestigt. Das zweite Sensorelement 19 wirkt mit dem ersten Sensorelement 22 zusammen. Entsprechend ist das zweite Sensorelement 20 an dem Schaltelement 18 befestigt. Das zweite Sensorelement 20 wirkt mit dem ersten Sensorelement 23 zusammen.

In der gezeigten Anordnung gemäß Fig. 2 ist keines der Schaltelemente 16, 18 betätigt. Die Sensorelemente 19, 22 und 20, 23 sind jeweils benachbart zu einander angeordnet. In dieser passiven, nicht betätigten Anordnung der Schaltelemente 16, 18 wirken die Sensorelemente 19, 22 und 20, 23 jeweils derart zusammen, dass eine Unterstützung des Fahrrads durch den Elektromotor 15 möglich ist. Sobald eines der Schaltelemente 16, 18 betätigt wird, also sobald einer der Drehhebel um eine Drehachse bezüglich des Schaltungsgehäuses 21 gedreht wird, wird der jeweils an dem Schaltelement 16 bzw. 18 befestigtes zweites Sensorelement 19, 20 von dem jeweils dazu korrespondierenden ersten Sensorelement 22 bzw. 23 weg verlagert. Die Sensorelemente sind derart gestaltet, dass die Entfernung zwischen den Sensorelementen 19 und 22 bzw. 20 und 23 erfasst wird. Bei Erreichen bzw. Überschreiten eines voreinstellbaren Mindestabstands wird von mindestens einem der Sensorelemente 19, 22, bzw. 20, 23 ein Schaltsignal ausgelöst und an eine nicht dargestellte Steuerungseinheit übermittelt, so dass die Stromversorgung in dem Elektromotor 15 unterbrochen wird. Das bedeutet, dass sobald ein bevorstehender Gangwechsel durch Betätigen eines der Schaltelemente 16, 18 initiiert werden soll, dies erfasst wird und zum Abschalten der Unterstützung des Fahrrads durch den Elektromotor 15 führt. Dadurch ist es möglich, dass ein Schaltvorgang an dem Fahrrad 1 durchgeführt werden kann, ohne dass die Kraftübertragungseinrichtung 13 einer Zugbeanspruchung aufgrund einer Antriebskraft durch den Elektromotor 15 unterliegt.

Die Schaltelemente 16, 18 sind derart federbelastet ausgerührt, dass nach dem Betätigen des Schaltelements 16 bzw. 18 dieses selbsttätig in den nicht betätigten Zustand, wie in Fig. 2 dargestellt, zurückverlagert wird. Das bedeutet, dass nach einem Gangwechsel, während der Elektromotor 15 nicht unterstützt, da er von der Stromversorgung getrennt ist, die beiden Sensorelemente 19, 22 bzw. 20, 23 automatisch wieder benachbart zueinander angeordnet sind. Nach dem Abschluss eines Gangwechsels ist die Unterstützung durch den Elektromotor 15, insbesondere durch Bestromen des Elektromotors 15, automatisch wieder möglich. Insbesondere ist es nicht erforderlich, dass ein Fahrer des Fahrrads 1 eine aktive Handlung vornehmen muss, um eine Unterstützung durch den Elektromotor 15 zu ermöglichen.

Bei dem im Ausführungsbeispiel gemäß Fig. 2 gezeigten Sensorelementen 19, 22 bzw. 20, 23 handelt es sich um elektromagnetische Näherungsschalter, sogenannte Reed-Kontakte. Es ist auch möglich, dass die zusammenwirkenden Sensorelemente ihre Positionierung zueinander optisch, mechanisch oder elektrisch erfassen.

Es ist auch möglich, dass das Schaltelement in den Griff 7 integriert ist. In diesem Fall ist der Griff ein Drehgriff, der bezüglich des Lenkers 6 um eine Lenker-Längsachse drehbar ist. Durch Drehen des Drehgriffs 7 kann ein Gangwechsel in Abhängigkeit einer Drehrichtung nach oben bzw. nach unten erfolgen. Zu jeder Gangstufe der Gangschaltung korrespondiert eine Drehposition des Drehgriffs 7 bezüglich des Lenkers 6. In diesem Fall können an dem Lenker 6 ortsfest vorgesehene erste Sensorelemente entlang des Umfangs der Lenkerstange beabstandet zueinander angebracht sein. Die ersten Sensorelemente sind derart angeordnet, dass ein zweites, an dem Drehgriff vorgesehenes Sensorelement immer dann mit mindestens einem der ersten Sensorelemente zusammenwirkt, wenn eine Gangstufe erreicht ist. Während einer Drehbewegung des Drehgriffs 7 wird das zweite Schaltelement von dem mindestens einen ersten Schaltelement entfernt und dadurch, wie vorstehend beschrieben, ein Schaltsignal für eine Unterbrechung der Unterstützung durch den Elektromotor 15 initiiert.

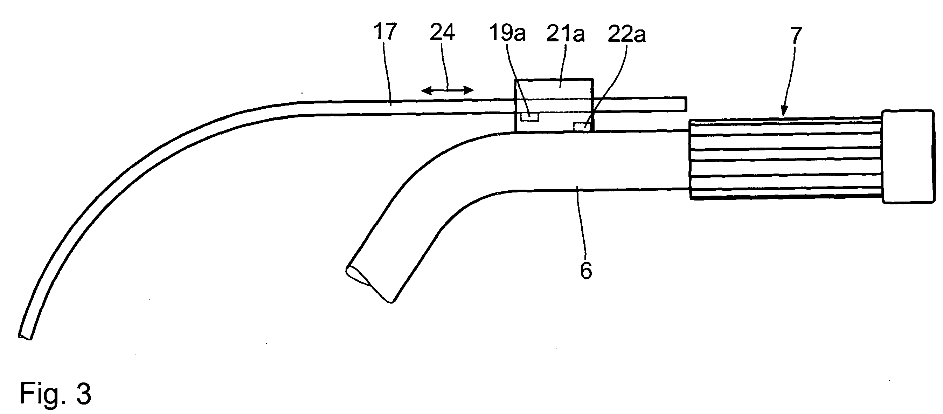

Im Folgenden wird unter Bezugnahme auf Fig. 3 eine weitere Ausführungsform einer Vorrichtung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass das zweite Sensorelement 19a mittelbar mit einem nicht dargestellten Schaltelement verbunden ist. Die mittelbare Verbindung erfolgt durch das mechanische Verbindungselement 17, das gemäß dem gezeigten Ausführungsbeispiel als Bowdenzug ausgeführt ist. Beim Betätigen des nicht dargestellten Schaltelements erfolgt eine Verlagerung des Bowdenzugs 17 entsprechend des in Fig. 3 dargestellten Doppelpfeils 24. Das zweite Sensorelement 19a ist fest mit dem Bowdenzug 17 verbunden. Das zweite Sensorelement 19a folgt der Bewegung entlang des Doppelpfeils 24. In einem Schaltungsgehäuse 21 a ist ortsfest das erste Sensorelement 22a angebracht. In der in Fig. 3 gezeigten Anordnung ist eine Betätigung des nicht dargestellten Schaltelements gezeigt. Aus diesem Grund ist das zweite Sensorelement 19a beabstandet von dem ersten Sensorelement 22a angeordnet. Nach Beendigung des Schaltvorgangs wird der Bowdenzug 17 wieder nach rechts in Richtung des Griffs 7 verlagert, so dass das zweite Sensorelement 19a benachbart zu dem ersten Sensorelement 22a angeordnet ist. Dann ist eine Unterstützung durch den Elektromotor 15 wieder möglich. In der in Fig. 3 gezeigten Anordnung, in der die beiden Sensorelemente 19a, 22a beabstandet zueinander angeordnet sind, wird ein Schaltsignal ausgelöst, das eine Unterbrechung der Unterstützung durch den Elektromotor bewirkt.

Die Sensorelemente 19a, 22a können analog dem ersten Ausführungsbeispiel als Reedkontakte ausgeführt sein und elektromagnetisch zusammenwirken. Die Sensorelemente 19a, 22a können aber auch optisch, mechanisch, elektrisch oder induktiv zusammenwirken. Das nicht dargestellte Schaltelement kann analog dem ersten Ausführungsbeispiel als Drehhebel oder als Drehgriff ausgeführt sein.

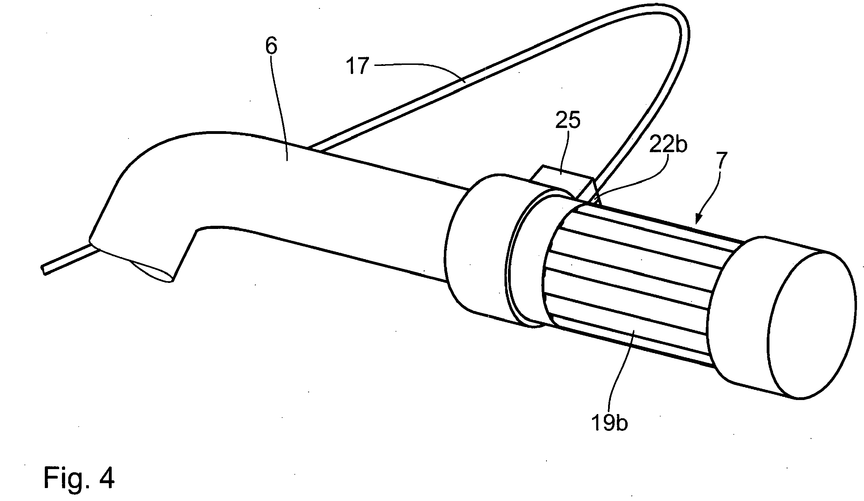

Im Folgenden wird unter Bezugnahme auf Fig. 4 eine weitere Ausführungsform einer Vorrichtung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Wesentlicher Unterschied des in Fig. 4 gezeigten Ausführungsbeispiels ist die Ausführung der Sensorelemente. Die nicht im Einzelnen dargestellten Sensorelemente sind in eine ringförmige Sensoreinheit 25 integriert. Die Sensoreinheit 25 ist als Drehmomentgeber ausgeführt. Der Drehmomentgeber 25 weist einen integrierten Hall-Sensor als erstes Sensorelement 22b auf. Das erste Sensorelement 22b, das ortsfest an der Lenkerstange 6 angeordnet ist, wirkt mit mehreren, an einer äußeren Zylindermantelfläche des Drehgriffs 7 angeordneten Permanentmagneten als zweite Sensorelemente 19b zusammen. Das bedeutet, dass eine Drehung des Drehgriffs 7, der als Schaltelement dient, ein Drehmoment bezüglich des Drehmomentgebers 25 verursacht. Das Drehmoment wird mittels des Drehmomentgebers 25 von dem zweiten Sensorelement 22b erfasst. Der Drehgriff 7 ist derart ausgeführt, dass ein Drehmoment insbesondere dann anliegt, wenn ein Schaltvorgang erfolgt. Immer dann, wenn gerade kein Schaltvorgang erfolgt, wird kein Drehmoment erfasst und somit keine Unterbrechung der Unterstützung durch den Elektromotor 15 bewirkt.

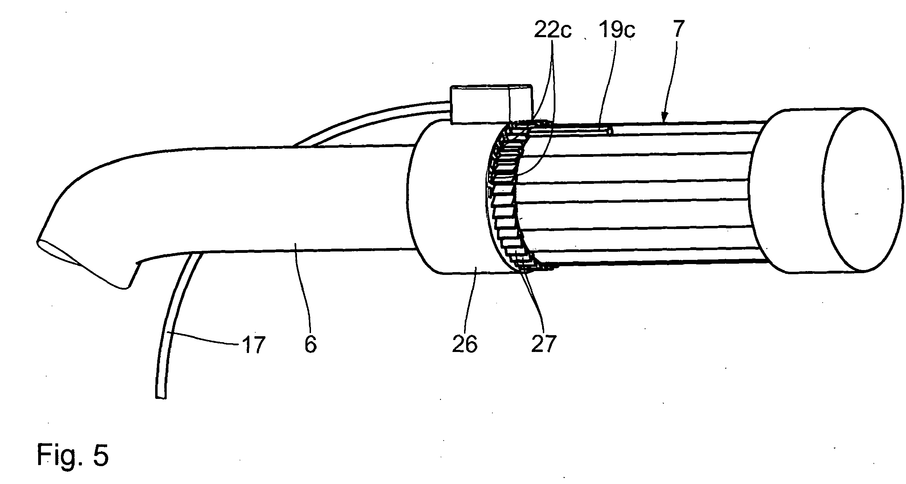

Im Folgenden wird unter Bezugnahme auf die Fig. 5 eine weitere Ausführungsform einer Vorrichtung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c.

Wesentlicher Unterschied gegenüber dem ersten Ausführungsbeispiel ist die Ausführung des zweiten Sensorelements 19c, das als Lichtquelle ausgeführt ist. Als Lichtquelle dient insbesondere eine LED-Diode oder eine Laserdiode. Die Lichtquelle 19c ist an dem Drehgriff 7, der gleichzeitig als Schaltelement dient, befestigt. An einer an dem Lenker 6 feststehenden Ringmanschette 26 sind entlang des äußeren Umfangs an einer Stirnseite der Ringmanschette 26 dem Drehgriff 7 zugewandt mehrere diskrete Lichtsensoren 22c als erste Sensorelemente angeordnet. Entlang einer Lenker-längsachse ist zwischen dem Drehgriff 7 und der Ringmanschette 26 eine sägezahnförmige Blende 27 angeordnet. Die Blende 27 ist derart ausgeführt, dass der von der Lichtquelle 19c ausgesandte Lichtstrahl abgedeckt ist, wenn der Drehgriff gedreht wird und zwischen zwei diskreten Schaltstufen angeordnet ist, also ein Gangwechsel stattfindet. Die Blende 27 kann in jeder anderen Form und insbesondere als Lochblende ausgeführt sein. Sobald eine definierte, diskrete Gangstufe erreicht ist, kann der von der Lichtquelle 19c ausgesandte Lichtstrahl durch eine zwischen zwei benachbarten Sägezähnen vorgesehene Ausnehmung der Blende 27 hindurchtreten und von einem der Lichtsensoren 22c erfasst werden. Für den Fall, dass keiner der Lichtsensoren 22c Lichtstrahlung von der Lichtquelle 19c empfängt, wird ein Schaltsignal zur Unterbrechung der Unterstützung durch den Elektromotor 15 initiiert.

Anstelle der vorstehenden Ausführung der Sensorelemente als Lichtquelle 19c und Lichtsensor 22c ist es auch denkbar, magnetische Sensoren vorzusehen, die durch eine Steuerscheibe in Folge einer Drehbewegung des Drehgriffs 7 zusammenwirken können. Entsprechend ist es auch denkbar, eine mechanische Steuerscheibe einzusetzen.

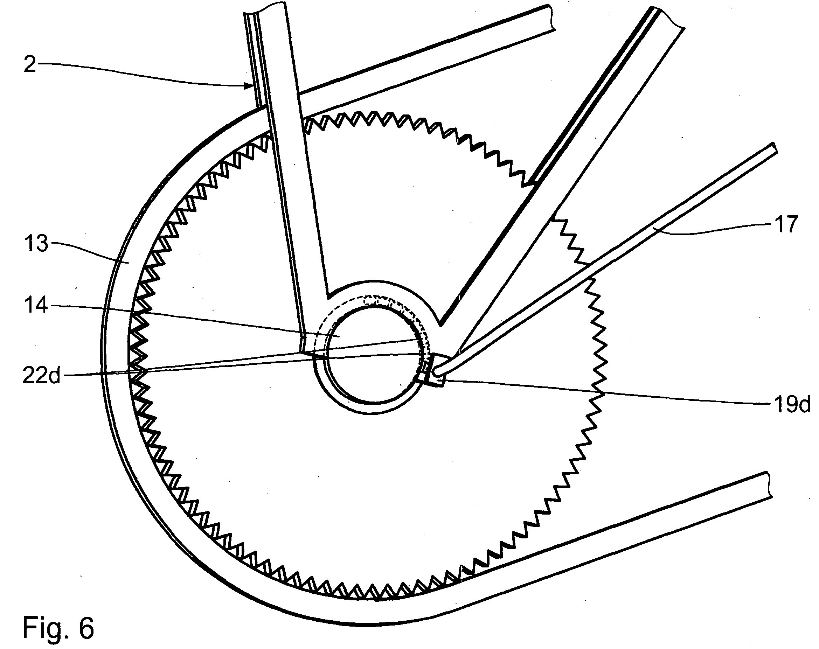

Nachfolgend wird unter Bezugnahme auf die Fig. 6 eine weitere Ausführungsform einer Vorrichtung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten d.

Wesentlicher Unterschied ist, dass das zweite Sensorelement 19d benachbart zu der Nabe 14 des Hinterrads 4 angeordnet ist. Bei einem Gangwechsel wird das zweite Sensorelement 19d relativ zu der feststehenden Nabe 14 entlang einer Umfangsrichtung um die Nabe 14 verlagert. Entlang des Umfangs der Nabe sind mehrere erste Sensorelemente 22d vorgesehen. Das zweite Sensorelement 19d ist fest mit dem nicht dargestellten Schaltelement verbunden. Eine Betätigung des Schaltelements bewirkt eine Verlagerung des zweiten Sensorelements 19d wie oben beschrieben. Die Funktionsweise, insbesondere das Zusammenwirken der Sensorelemente 19d, 22d ist insbesondere analog zu den Sensorelementen gemäß dem ersten Ausführungsbeispiel.

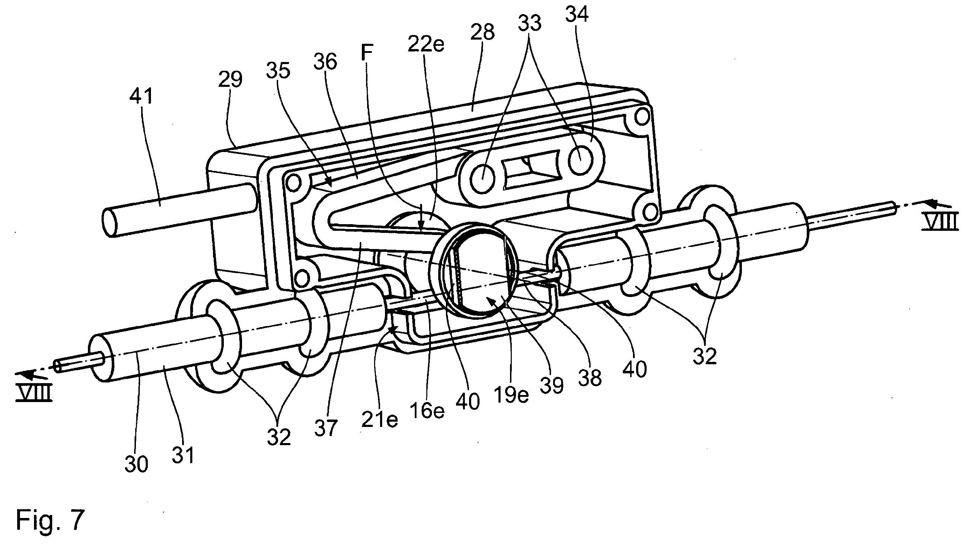

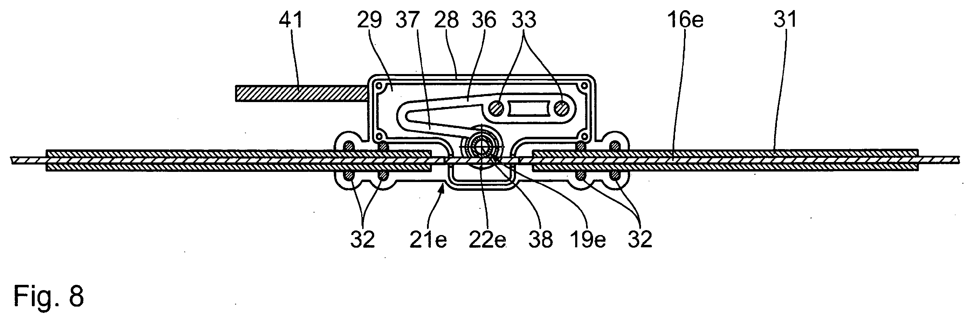

Nachfolgend wird unter Bezugnahme auf die Fig. 7 und 8 ein Ausführungsbeispiel der Erfindung beschrieben. Konstruktiv identische Teile erhalten dieselben Bezugszeichen wie bei den vorangegangen Ausführungsformen, auf deren Beschreibung hiermit verwiesen wird. Konstruktiv unterschiedliche, jedoch funktionell gleichartige Teile erhalten dieselben Bezugszeichen mit einem nachgestellten e.

Ähnlich der in Fig. 3 dargestellten Ausführungsform sind bei der Ausführungsform gemäß der Erfindung das erste Sensorelement 22e und das zweite Sensorelement 19e in einem Schaltgehäuse 21 e angeordnet. Das Schaltgehäuse 21e umfasst einen in Fig. 7 und 8 dargestellten Gehäusegrundkörper 28 mit einem Boden 29 sowie einen nicht dargestellten Gehäusedeckel.

Durch das Schaltgehäuse 21e ist ein Bowdenzug als betätigbares Zugelement 16e hindurchgeführt. Das Zugelement 16e weist eine Zugelementlängsachse 30 auf. Das Zugelement 16e ist, insbesondere außerhalb des Schaltgehäuses 21e durch einen Schutzmantel 31 geschützt. Mittels jeweils zwei in dem Schaltgehäuse 21 e integrierten Dichtungselementen 32 in Form von O-Ringen ist das Zugelement 16e, insbesondere an einer äußeren Mantelfläche des Schutzmantels 31, an Gehäuseöffnungen zu einer äußeren Umgebung abgedichtet. Dadurch ist gewährleistet, dass ein von dem Schaltungsgehäuse 21 e umschlossener Innenraum vor äußeren Einflüssen und insbesondere vor Feuchtigkeit geschützt ist. Insbesondere ist das erste Sensorelement 22e an dem Boden 29 des Gehäusegrundkörpers 28 befestigt. Der Gehäusegrundkörper 28 und damit das Schaltgehäuse 21 e sind über die Dichtungselemente 32 an dem Schutzmantel 31 an dem Fahrrad ortsfest angebracht. Das Zugelement 16e ist innerhalb des Schutzmantels 31 entlang der Zugelement-Längsachse 30 betätigbar.

Fest mit dem Boden 29 verbunden sind zwei Haltezapfen 33 die zur Befestigung eines Haltekörpers 34 dienen. Dazu weist der Haltekörper 34 zwei mit den Haltezapfen 33 korrespondierende Aufnahmebohrungen auf. Der Haltekörper 34 kann durch Abziehen von den Haltezapfen 33 aus dem Schaltungsgehäuse 21 e demontiert werden. Die Haltezapfen 33 sind insbesondere einstückig an dem Gehäusegrundkörper 28 angeformt.

Einstückig an dem Haltekörper 34 angeformt ist ein Federelement 35. Das Federelement 35 ist im Wesentlichen V-förmig ausgeführt, wobei ein erster Schenkel 36 des V an einem freien Ende mit dem Haltekörper 34 und ein zweiter Schenkel 37 des V an einem freien Ende mit dem Sensorrad 19e verbunden ist. An einem jeweils gegenüberliegenden Ende sind die beiden Federschenkel 36, 37 gegenseitig miteinander verbunden. Das V des Federelements 35 ist im Wesentlichen entlang der Zugelementlängsachse 30 orientiert. Das bedeutet, dass eine Öffnung des V, also ein Abstand von dem Haltekörper 34 zu dem Sensorrad 19e senkrecht zur Zugelementlängsachse 30 orientiert ist. Das Federelement 35 weist eine Elastizität derart auf, dass es geeignet ist, eine Federkraft F auf das Sensorrad 19e auszuüben. Das Federelement 35 ist vorgespannt. Das Sensorrad 19e ist gegen das Zugelement 16e gedrückt. Die Federkraft F ist insbesondere senkrecht zur Zugelementlängsachse 30 orientiert. Die Federkraft F ist insbesondere senkrecht zur Sensorrad-Drehachse 38 orientiert. Das Sensorrad 19e ist um die Sensorrad-Drehachse 38 drehbar in dem Schaltungsgehäuse 21 e gelagert.

Das Federelement 35 ist insbesondere aus Kunststoff oder aus Metall hergestellt. Das Sensorrad 19e ist im Wesentlichen als zylindrische Scheibe ausgeführt. Das Sensorrad 19e liegt mit einer äußeren Zylindermantelfläche an dem Bowdenzug 16e an. Aufgrund der Federkraft F wird das Sensorrad gegen den Bowdenzug 16e gedrückt. Eine Verlagerung des Bowdenzugs 16e entlang der Zugelementlängsachse 30 bewirkt in Folge der zwischen dem Bowdenzug 16e und dem Sensorrad 19e wirkenden Reibungskraft eine Drehbewegung des Sensorrades 19e um die Sensorrad-Drehachse 38.

Drehfest bezüglich der Sensorrad-Drehachse 38 ist mit dem Sensorrad 19e ein Permanentmagnet 39 verbunden. Das bedeutet, dass eine Drehung des Sensorrades 19e um die Sensorrad-Drehachse 38 gleichzeitig eine Drehung des Permanentmagneten 39 um die Sensorrad-Drehachse 38 bewirkt. Der Permanentmagnet 39 weist ein Magnetfeld auf, das bezüglich der Sensorrad-Drehachse 38 nicht rotationssymmetrisch ist. Gemäß dem gezeigten Ausführungsbeispiel ist dies dadurch gelöst, dass der Magnet 39 im Wesentlichen scheibenförmig ausgeführt ist, wobei seitlich zwei abgeflachte Ausnehmungen 40 vorgesehen sind. Das bedeutet, dass der Permanentmagnet 39 beispielsweise eine Magnetisierungsrichtung entlang der Sensorrad-Drehachse 38 aufweisen kann. Aufgrund der bezüglich der Sensorrad-Drehachse 38 unsymmetrischen Geometrie des Magneten 39 bewirkt eine Drehung ein bezogen auf die Sensorrad-Drehachse 38 veränderliches Magnetfeld. Es ist auch denkbar, dass der Permanentmagnet 39 ein Magnetfeld derart aufweist, das in einer Ebene senkrecht zur Sensorrad-Drehachse 38 orientiert ist. Bei einer Drehung um die Sensorrad-Drehachse 38 ändert sich dann entsprechend das Magnetfeld.

Eine derartige Änderung des Magnetfelds wird von dem als Magneten-Sensor, insbesondere als Hallsensor, ausgeführten ersten Sensorelement 22e erfasst. Das erste Sensorelement 22e ist an dem Boden 29 des Schaltungsgehäuses 21 e angeordnet. Das erste Sensorelement 22e ist insbesondere koaxial zur Sensorrad-Drehachse 38 und insbesondere beabstandet zu dem zweiten Sensorelement 19e in dem Schaltungsgehäuse 21 e angeordnet. In der Darstellung in Fig. 8 ist das erste Sensorelement in einer Ebene hinter der Zeichenebene angeordnet und deshalb nur teilweise zu erkennen. In Fig. 8 ist der Permanentmagnet 39 nicht dargestellt.

Insbesondere ergibt sich aus Fig. 8, dass das Sensorrad 19e als Hohlrad ausgeführt ist. Es ist denkbar, den Permanentmagneten in das Hohlrad zu integrieren. Eine derartige Ausführung ist besonders kompakt aufgebaut und ermöglicht eine klein bauende Ausführung des Schaltungsgehäuses 21e. In dieser Ausführung ist der Permanentmagnet insbesondere zylinderförmig ausgeführt. In diesem Fall ist es erforderlich, dass der Permanentmagnet 39 eine Magnetisierungsrichtung derart aufweist, dass bei einer Drehung des Sensorrades 19e um die Sensorrad-Drehachse 38 eine Veränderung des Magnetfeldes mittels des ersten Sensorelements 22e möglich ist. Das Sensorrad 19e kann an der äußeren Zylindermantelfläche eine Nut aufweisen, um eine verbesserter Führung und Kraftübertragung des Bowdenzugs 16e zu ermöglichen.

In das erste Sensorelement 22e ist eine Sensorikeinheit integriert. Die Sensorikeinheit ist geeignet, ein Schaltsignal für die Steuerungseinheit auszulösen. Ein derartiges Signal kann über das Kabel 41 an die Steuerungseinheit übertragen werden.

## Patentansprüche

1. Vorrichtung zum Abschalten einer Unterstützung durch einen ein Fahrrad unterstützend antreibenden Elektromotor, wobei die Vorrichtung umfasst,
a. ein erstes Sensorelement (22e), das ortsfest an dem Fahrrad anbringbar ist, und
b. ein zweites Sensorelement (19e), das an einem betätigbaren Schaltelement (16e) einer Gangschaltung des Fahrrads anbringbar ist,
wobei
c. die Sensorelemente (19e, 22e) derart zusammenwirken, dass bei Betätigen des Schaltelements (16e) eine Unterstützung des Fahrrads durch den Elektromotor unterbrochen ist,
d. das Schaltelement (16e) ein entlang einer Zugelementlängsachse (30) betätigbares Zugelement ist und
e. das zweite Sensorelement (19e) als ein um eine Sensorrad-Drehachse (38) drehbares und federnd gehaltenes Sensorrad ausgeführt ist,
**dadurch gekennzeichnet, dass** das Sensorrad (19e) mit einer quer zur Zugelementlängsachse (30) orientierten Federkraft (F) belastet an dem Zugelement (16e) anliegt.

2. Vorrichtung nach Anspruch 1, **dadurch gekennzeichnet, dass** die Sensorelemente (19e, 22e) in einem Schaltgehäuse (21e) angeordnet sind.

3. Vorrichtung nach Anspruch 2, **dadurch gekennzeichnet, dass** das Zugelement (16e) durch das Schaltgehäuse (21e) geführt ist.

4. Vorrichtung nach einem der vorstehenden Ansprüche, **gekennzeichnet durch** ein Federelement (35) zur federnden Halterung des Sensorrades (19e), insbesondere in einem Schaltgehäuse (21 e).

5. Vorrichtung nach einem der vorstehenden Ansprüche, **dadurch gekennzeichnet, dass** das Sensorrad (19e) einen Magnet (39), insbesondere einen Permanentmagnet, aufweist, wobei ein von dem Magneten (39) verursachtes Magnetfeld bei einer Drehung des Sensorrades (19e) um die Sensorrad-Drehachse (39) veränderlich ist.

6. Vorrichtung nach einem der Ansprüche 2-4, **dadurch gekennzeichnet, dass** das Schaltgehäuse (21e) einen Gehäusegrundkörper (28) und einen damit lösbar verbindbaren Gehäusedeckel aufweist.

7. Vorrichtung nach einem der Ansprüche 2-4, 6, **dadurch gekennzeichnet, dass** das Schaltgehäuse (21e) mindestens ein Halteelement (32) aufweist, mit dem es an einer Hülle (31) des Zugelements (16e) gehalten ist.

8. Vorrichtung nach einem der vorstehenden Ansprüche, **dadurch gekennzeichnet, dass** das erste Sensorelement (22e) entlang der Sensorrad-Drehachse (39) beabstandet zu dem Sensorrad (19e) angeordnet ist.

9. Vorrichtung nach einem der vorstehenden Ansprüche, **dadurch gekennzeichnet, dass** das erste Sensorelement (22e) ein Magnetsensor ist, der eine Drehbewegung des Sensorrads (19e) um die Sensorrad-Drehachse (39) erfasst.

10. Vorrichtung nach einem der vorstehenden Ansprüche, **dadurch gekennzeichnet, dass** das Sensorrad (19e) mit einer äußeren Mantelfläche kraftschlüssig an dem Zugelement (16e) anliegt.

11. Vorrichtung nach einem der vorstehenden Ansprüche, **gekennzeichnet durch** eine Sensorikeinheit, die insbesondere in das erste Sensorelement (22e) integriert ist, wobei die Sensorikeinheit insbesondere in Signalverbindung mit einer Steuereinheit steht.

12. Vorrichtung nach Anspruch 4, **dadurch gekennzeichnet, dass** das Federelement (35) aus Kunststoff hergestellt ist.

13. Vorrichtung nach einem der vorstehenden Ansprüche, **dadurch gekennzeichnet, dass** das erste Sensorelement (22e) an einem Boden (29) eines Schaltgehäuses (21 e), insbesondere drehfest bezüglich der Sensorrad-Drehachse (39), befestigt ist.

14. Fahrrad mit einem unterstützend antreibenden Elektromotor (15) und mit einer Vorrichtung nach einem der vorstehenden Ansprüche.

## Claims

1. Device for disconnecting a support by an auxiliary driving electric motor for a bicycle, wherein the device comprises
a. a first sensor element (22e), which can be attached in a fixed position onto the bicycle, and
b. a second sensor element (19e), which can be attached onto an activatable switching element (16e) of a gear shift of the bicycle,
wherein
c. the sensor elements (19e, 22e) operate together so that on activating the switching element (16e) a support of the bicycle is interrupted by the electric motor,
d. the switching element (16e) is a tensile element activatable along a tensile element longitudinal axis (30) and
e. the second sensor element (19e) is designed as a sensor wheel rotatable about a sensor wheel rotary axis (38) and held by spring force,
**characterised in that** with a spring force (F) oriented transversely to the tensile element longitudinal axis (30) the sensor wheel (19e) bears in a loaded manner on the tensile element (16e).

2. Device according to claim 1, **characterised in that** the sensor elements (19e, 22e) are arranged in a switch housing (21e).

3. Device according to claim 2, **characterised in that** the tensile element (16e) is guided through the switch housing (21e).

4. Device according to any one of the preceding claims, **characterised by** a spring element (35) for the spring mounting of the sensor wheel (19e), in particular in a switch housing (21e).

5. Device according to any one of the preceding claims, **characterised in that** the sensor wheel (19e) comprises a magnet (39), in particular a permanent magnet, wherein a magnetic field created by the magnet (39) can be varied with a rotation of the sensor wheel (19e) about the sensor wheel axis of rotation (39).

6. Device according to any one of claims 2-4, **characterised in that** the switch housing (21e) comprises a housing main body (28) and a housing cover connected to the latter in a detachable manner.

7. Device according to one of claims 2- 4, 6, **characterised in that** the switch housing (21e) comprises at least one holding element (32), by means of which it is held on a casing (31) of the tensile element (16e).

8. Device according to any one of the preceding claims, **characterised in that** the first sensor element (22e) is arranged along the sensor wheel axis of rotation (39) spaced apart from the sensor wheel (19e).

9. Device according to any one of the preceding claims, **characterised in that** the first sensor element (22e) is a magnet sensor, which detects a rotary movement of the sensor wheel (19e) about the sensor wheel axis of rotation (39).

10. Device according to any one of the preceding claims, **characterised in that** the sensor wheel (19e) bears with an outer casing surface on the tensile element (16e) in a force-fitting manner.

11. Device according to any one of the preceding claims, **characterised by** a sensor unit which is integrated in particular into the first sensor element (22e), wherein the sensor unit in particular is in signal connection with a control unit.

12. Device according to claim 4, **characterised in that** the spring element (35) is made of plastic.

13. Device according to any one of the preceding claims, **characterised in that** the first sensor element (22e) is secured to a base (29) of a switch housing (21e), in particular in a rotationally secure manner with respect to the sensor wheel axis of rotation (39).

14. Bicycle comprising an auxiliary driving electric motor (15) and a device according to any one of the preceding claims.

## Revendications

1. Dispositif servant à désactiver une assistance par un moteur électrique d'assistance entraînant un vélo, sachant que le dispositif comprend
a. un premier élément de capteur (22e), qui peut être installé de manière stationnaire au niveau du vélo, et
b. un deuxième élément de capteur (19e), qui peut être installé au niveau d'un élément de commutation (16e) pouvant être actionné d'un dérailleur du vélo,
sachant que
c. les éléments de capteur (19e, 22e) coopèrent de telle manière qu'une assistance du vélo est interrompue par le moteur électrique lors de l'actionnement de l'élément de commutation (16e),
d. l'élément de commutation (16e) est un élément de traction pouvant être actionné le long d'un axe longitudinal d'élément de traction (30), et
e. le deuxième élément de capteur (19e) est réalisé sous la forme d'une roue de capteur pouvant tourner autour d'un axe de rotation de roue de capteur (38) et maintenue sur ressorts,
**caractérisé en ce que** la roue de capteur (19e) repose, à l'aide d'une force de ressort (F) orientée de manière transversale par rapport à l'axe longitudinal d'élément de traction (30), de manière contrainte au niveau de l'élément de traction (16e).

2. Dispositif selon la revendication 1, **caractérisé en ce que** les éléments de capteur (19e, 22e) sont disposés dans un boîtier de commutation (21e).

3. Dispositif selon la revendication 2, **caractérisé en ce que** l'élément de traction (16e) est guidé à travers le boîtier de commutation (21e).

4. Dispositif selon l'une quelconque des revendications précédentes, **caractérisé par** un élément de ressort (35) servant à maintenir sur ressorts la roue de capteur (19e), en particulier dans un boîtier de commutation (21e).

5. Dispositif selon l'une quelconque des revendications précédentes, **caractérisé en ce que** la roue de capteur (19e) présente un aimant (39), en particulier un aimant permanent, sachant qu'un champ magnétique provoqué par l'aimant (39) est variable autour de l'axe de rotation de roue de capteur (39) lors d'une rotation de la roue de capteur (19e).

6. Dispositif selon l'une quelconque des revendications 2 - 4, **caractérisé en ce que** le boîtier de commutation (21e) présente un corps de base de boîtier (28) et un couvercle de boîtier pouvant être relié à ce dernier de manière amovible.

7. Dispositif selon l'une quelconque des revendications 2 - 4, 6, **caractérisé en ce que** le boîtier de commutation (21e) présente au moins un élément de maintien (32), à l'aide duquel il est maintenu au niveau d'une enveloppe (31) de l'élément de traction (16e).

8. Dispositif selon l'une quelconque des revendications précédentes, **caractérisé en ce que** le premier élément de capteur (22e) est disposé le long de l'axe de rotation de roue de capteur (39) à distance de la roue de capteur (19e).

9. Dispositif selon l'une quelconque des revendications précédentes, **caractérisé en ce que** le premier élément de capteur (22e) est un capteur magnétique, qui détecte un mouvement de rotation de la roue de capteur (19e) autour de l'axe de rotation de roue de capteur (39).

10. Dispositif selon l'une quelconque des revendications précédentes, **caractérisé en ce que** la roue de capteur (19e) repose à force au niveau de l'élément de traction (16e) par une surface enveloppante extérieure.

11. Dispositif selon l'une quelconque des revendications précédentes, **caractérisé par** une unité de détection, qui est intégrée en particulier dans le premier élément de capteur (22e), sachant que l'unité de détection est en particulier en liaison de signal avec une unité de commande.

12. Dispositif selon la revendication 4, **caractérisé en ce que** l'élément de ressort (35) est fabriqué à partir d'une matière plastique.

13. Dispositif selon l'une quelconque des revendications précédentes, **caractérisé en ce que** le premier élément de capteur (22e) est fixé au niveau d'un fond (29) d'un boîtier de commutation (21e), en particulier de manière solidaire en rotation par rapport à l'axe de rotation de roue de capteur (39).

14. Vélo comprenant un moteur électrique (15) d'assistance d'entraînement et un dispositif selon l'une quelconque des revendications précédentes.
